# EUROPÄISCHE PATENTSCHRIFT

(11) **EP 1 750 101 B1**
(45) Veröffentlichungstag und Bekanntmachung des Hinweises auf die Patenterteilung: **23.02.2011**
(21) Anmeldenummer: 06010598.8
(22) Anmeldetag: 23.05.2006
(51) Int. Cl.: G01D 5/347, G01D 5/245, G01D 5/249

(54) **Feldmodulierende Winkelmesseinrichtung und Verfahren zu deren Betrieb**
Field modulating angle measuring device and method for its operation
Dispositif de mesure d'angle à modulation de terrain et procédé destiné à son exploitation

(30) Priorität: 02.08.2005 DE 102005036161
(43) Veröffentlichungstag der Anmeldung: 07.02.2007
(73) Patentinhaber: Dr. Johannes Heidenhain GmbH, 83292 Traunreut (DE)
(72) Erfinder: Schroter, Andreas, 83278 Traunstein (DE); Bielski, Steffen, 84518 Garching/Alz (DE)

(56) Entgegenhaltungen:
- US-A- 5 065 525
- US-A1- 2006 043 963
- US-B1- 6 326 781

## Beschreibung

Die Erfindung betrifft eine feldmodulierende Winkelmesseinrichtung gemäß dem Anspruch 1, und ein Verfahren zum Betrieb der Winkelmesseinrichtung, gemäß dem Anspruch 12.

Feldmodulierende Winkelmesseinrichtungen können auf einem induktiven, magnetischen oder kapazitiven Messprinzip basieren und werden beispielsweise in Drehgebern zur Bestimmung der Winkellage zweier relativ zueinander drehbaren Maschinenteile verwendet.

Bei feldmodulierenden induktiven Winkelmesseinrichtungen werden häufig als Abtasteinheit Erregerspulen und Empfängerspulen in Form von Leiterbahnen auf einer gemeinsamen Leiterplatte aufgebracht, die beispielsweise mit einem Stator eines Drehgebers fest verbunden ist. Dieser Leiterplatte gegenüber befindet sich eine weitere Platine, auf der als Messteilung in periodischen Abständen elektrisch leitende Flächen als Teilungsstruktur aufgebracht sind, und welche mit dem Rotor des Drehgebers drehfest verbunden ist. Wenn an den Erregerspulen ein elektrisches Erregerfeld angelegt wird, werden in den Empfängerspulen während der Relativdrehung zwischen Rotor und Stator von der Winkellage abhängige Ausgangssignale erzeugt. Diese Ausgangssignale werden dann in einer Auswerteelektronik weiterverarbeitet. Häufig sind die Bauelemente einer derartigen Auswerteelektronik auf einer weiteren Leiterplatte bzw. Platine untergebracht. Die Leiterplatte mit den Erreger- und Empfängerspulen und die Platine mit der Auswerteelektronik sind nicht selten über Flex-Leiter und Steckverbindungen miteinander verbunden.

In der EP 1 126 248 A1 wird ein Verfahren zur Bestimmung des Abtastabstandes beschrieben, welches für den Kalibrierbetrieb, vor dem eigentlichen Messbetrieb, dazu geeignet ist den Abtastabstand exakt zu justieren. Das Verfahren und die Winkelmesseinrichtung gemäß dem Stand der Technik haben den Nachteil, dass der Abtastabstand im eigentlichen Messbetrieb der Winkelmesseinrichtung nur noch vergleichsweise ungenau bestimmt werden kann.

Der Erfindung liegt daher die Aufgabe zugrunde, eine feldmodulierende, insbesondere eine induktive, Winkelmesseinrichtung und ein Verfahren zu deren Betrieb zu schaffen, so dass eine überaus genaue Bestimmung des Abtastabstandes auch während des eigentlichen Messbetriebs ermöglicht ist.

Diese Aufgabe wird erfindungsgemäß durch die Merkmale des Anspruches 1 bzw. des Anspruches 12 gelöst.

Die Erfindung umfasst demnach eine feldmodulierende Winkelmesseinrichtung, die unter anderem eine Abtasteinheit, eine Messteilung und eine Auswerteelektronik aufweist. Die Abtasteinheit und die Messteilung sind in einem Abtastabstand relativ zueinander drehbar angeordnet. Von der Abtasteinheit können winkelabhängige Ausgangssignale erzeugt werden, welche in der Auswerteelektronik weiterverarbeitbar sind. Darüber hinaus umfasst die Winkelmesseinrichtung eine Einheit zur Bestimmung der Größe bzw. Höhe der Signalamplituden der Ausgangssignale sowie einen Temperatursensor. Durch diesen ist die Temperatur in der Winkelmesseinrichtung bestimmbar. Die Winkelmesseinrichtung ist so konfiguriert, dass basierend auf der Temperatur und den Signalamplituden der Abtastabstand bestimmbar ist.

Durch eine derartige Ausgestaltung der Winkelmesseinrichtung ist es nunmehr möglich den Abtastabstand überaus genau zu bestimmen, auch wenn sich die Winkelmesseinrichtung schon längere Zeit im Messbetrieb befindet. Es wurde nämlich herausgefunden, dass durch eine temperaturbasierte Korrektur eine exaktere Bestimmung des Abtastabstandes erreichbar ist.

Unter feldmodulierenden Winkelmesseinrichtungen sind im Folgenden Winkelmesseinrichtungen zu verstehen, bei denen ein Messprinzip Anwendung findet, welches auf der drehwinkelbasierten Modulation von elektromagnetischen Feldern beruht, insbesondere beruht hier die Messung auf einem induktiven, magnetischen oder kapazitiven Prinzip oder einer Kombination der genannten Messprinzipien.

Mit Vorteil ist die Einheit zur Bestimmung der Signalamplituden einer Reglereinheit zugeordnet, die derart konfiguriert ist, dass die Signalamplituden der Ausgangssignale durch Einwirken auf eine Stellgröße eine vorgegebene Abweichung von einem Soll-Amplitudenwert nicht überschreiten.

Gemäß einer vorteilhaften Ausgestaltung der Erfindung ist die Winkelmesseinrichtung selbst mit einer Elektronik ausgestattet, durch die der Abtastabstand bestimmt werden kann. Insbesondere ist mit Vorteil die besagte Auswerteelektronik so konfiguriert, dass durch diese der Abtastabstand bestimmbar ist. Der Abtastabstand kann dann beispielsweise über eine digitale Schnittstelle an eine externe (in Bezug auf die Winkelmesseinrichtung) Folgeelektronik zur weiteren elektronischen Verarbeitung übertragen werden. Alternativ dazu umfasst die Erfindung auch Winkelmesseinrichtungen, bei denen der bestimmte Abtastabstand intern innerhalb der Winkelmesseinrichtung elektronisch weiterverarbeitet wird. Der bestimmte bzw. berechnete Abtastabstand dient also zur weiteren elektronischen Verarbeitung innerhalb oder außerhalb der Winkelmesseinrichtung.

In vorteilhafter Ausgestaltung der Erfindung umfasst die feldmodulierende Winkelmesseinrichtung eine Schaltung zur Bestimmung der relativen Drehzahl zwischen der Abtasteinheit der Messteilung. Diese Drehzahl wird dann zusätzlich zur Bestimmung des Abtastabstandes berücksichtigt.

Mit Vorteil wird von der Auswerteelektronik ein digitaler Wert für den Abtastabstand, also gleichsam eine binäre Zahl generiert, die dann in einem Mikroprozessor weiterverarbeitbar ist. Wenn dieser Mikroprozessor außerhalb der Winkelmesseinrichtung angeordnet ist, kann in vorteilhafter Weise die Winkelmesseinrichtung eine Schnittstelle aufweisen, über die der Wert an eine Folgelektronik übertragbar ist.

In einer bevorzugten Ausgestaltung der Erfindung umfasst die Auswerteelektronik einen ASIC-Baustein, wobei dann mit Vorteil in diesem der Temperatursensor, z. B. in Form einer temperaturempfindlichen Widerstandsschaltung integriert ist.

Die feldmodulierende Winkelmesseinrichtung kann über ein auskragendes Wellenende verfügen, oder aber eine Hohlwelle aufweisen, in welche eine Welle eingeführt werden kann, deren Drehstellung bzw. Drehzahl zu messen ist. In diesem Fall ist die Winkelmesseinrichtung also so konfiguriert ist, dass die Welle, von der Winkelmesseinrichtung umschließend aufgenommen werden kann.

Die Erfindung umfasst auch ein Verfahren zum Betrieb einer feldmodulierenden Winkelmesseinrichtung. Wenn die Winkelmesseinrichtung in Betrieb ist, wird die Messteilung von der Abtasteinheit abgetastet, so dass bei dieser Abtastung winkelabhängige Ausgangssignale erzeugt werden. Es werden zunächst die tatsächlichen Signalamplituden der Ausgangssignale im Sinne eines Ist-Wertes bestimmt. Weiterhin wird die Temperatur in der Winkelmesseinrichtung erfasst. Auf Basis der Signalamplituden und der erfassten Temperatur wird sodann der Abtastabstand bestimmt.

Mit Vorteil wird die Bestimmung so durchgeführt, dass der Abtastabstand in einer Form vorliegt, die eine weitere elektronische Verarbeitung innerhalb oder außerhalb der Winkelmesseinrichtung erlaubt. Das heißt, dass die Verarbeitung bzw. Auswertung des Abtastabstandes entweder in der Auswerteelektronik in der Winkelmesseinrichtung vorgenommen wird, oder aber der Abtastabstand außerhalb der Winkelmesseinrichtung, etwa in einer Folgeelektronik weiterverarbeitet wird.

In weiterer Ausgestaltung der Erfindung wird die Abweichung zwischen den zuvor bestimmten Signalamplituden der Ausgangssignale und einem Soll-Amplitudenwert bestimmt. Abhängig vom Betrag der Abweichung wird dann eine Stellgröße ermittelt, mit dem Ziel die Abweichung innerhalb vorgegebener Grenzen zu halten. Der Abtastabstand wird dann basierend auf der Stellgröße bestimmt. Die Stellgröße basiert demnach ihrerseits auf den zuvor bestimmten Signalamplituden. Der Abtastabstand wird also auch gemäß dieser Ausgestaltung der Erfindung auf Basis der Signalamplituden und der erfassten Temperatur bestimmt.

Mit Vorteil wird beim Betrieb der Winkelmesseinrichtung die relative Drehzahl zwischen der Abtasteinheit und der Messteilung erfasst und bei der Bestimmung des Abtastabstands korrigierend berücksichtigt. Das heißt, dass die Bestimmung des Abtastabstands und / oder der Längenänderung der Welle auch auf der vorliegenden Drehzahl basiert.

In weiterer Ausgestaltung der Erfindung wird auf Basis des Abtastabstands eine Längenänderung der Welle für einen Punkt auf der Welle außerhalb der Winkelmesseinrichtung bestimmt. Dadurch ist es möglich, dass unter Berücksichtigung dieser Längenänderung der Welle eine axiale Positionskorrektur z.B. für ein Werkzeug, das an der Welle befestigt ist, vorgenommen werden kann. Demnach ist es durch diese Maßnahme möglich sowohl die Drehstellung der Welle als auch ihre Längenänderung durch nur eine Messeinrichtung zu bestimmen. Unter den Begriff Welle fällt im Folgenden auch ein Werkzeug, welches axial fest an der Welle befestigt ist. Mit anderen Worten umfasst der Begriff Welle hier auch mehrstückig zusammengesetzte Anordnungen.

Vorteilhafte Ausbildungen der Erfindung entnimmt man den abhängigen Ansprüchen.

Weitere Einzelheiten und Vorteile der erfindungsgemäßen feldmodulierenden Winkelmesseinrichtung, sowie des Verfahrens zum Betrieb der Winkelmesseinrichtung ergeben sich aus der nachfolgenden Beschreibung eines Ausführungsbeispiels anhand der beiliegenden Figuren.

Es zeigen die
- Figur 1: eine Schnittdarstellung der Winkelmesseinrichtung,
- Figur 2: eine schematische Darstellung einer Werkzeugmaschinenspindel mit der Winkelmesseinrichtung,
- Figur 3: eine schematische Darstellung der Verfahrensschritte für den erfindungsgemäßen Betrieb der Winkelmesseinrichtung.

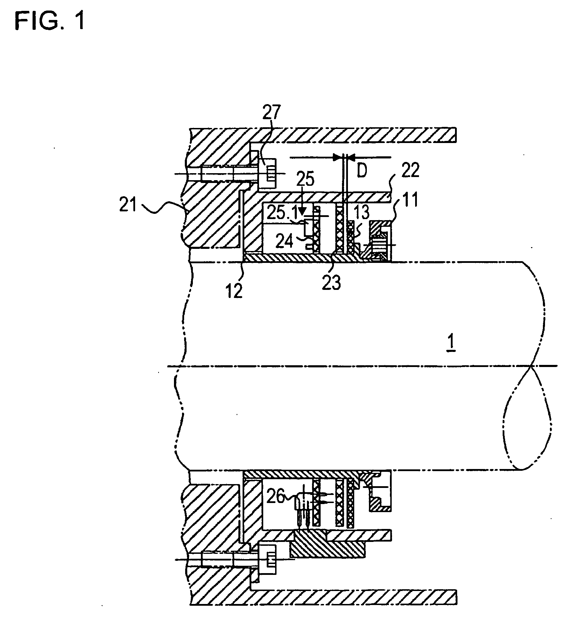

In der Figur 1 ist ein Ausführungsbeispiel der erfindungsgemäßen Winkelmesseinrichtung dargestellt, welche hier als eine induktive Winkelmesseinrichtung ausgestaltet ist. Demnach ist an einer Welle 1 eine Hülse 12 angeordnet, die durch einen Klemmring 11 drehfest an der Welle 1 festgelegt ist. Sowohl die Hülse 12 als auch die Welle 1 sind aus Stahl gefertigt, so dass die Hülse 12 und die Welle 1 den gleichen Wärmeausdehnungskoeffizienten aufweisen. An der Hülse 12 ist eine Messteilung 13 befestigt. Diese besteht aus einer ringförmigen Leiterplatte, auf der in periodischer Abfolge und in gleichen Teilungsschritten leitende und nicht leitende Bereiche, also Bereiche unterschiedlicher elektrischer Leitfähigkeit vorgesehen sind.

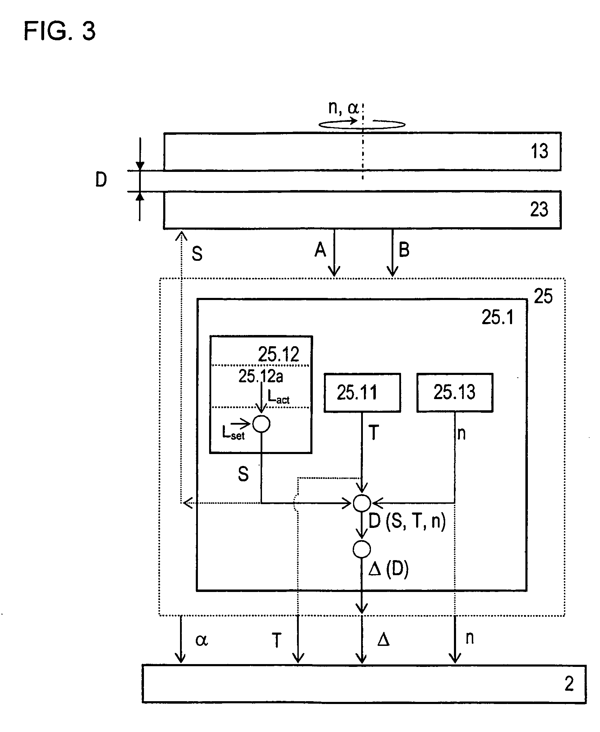

Der Messteilung 13 ist in einem Abtastabstand D (in der Figur 1 vergrößert dargestellt) gegenüberliegend eine Abtasteinheit 23 angeordnet. Die Abtasteinheit 23 ist hier ebenfalls als ringförmige Leiterplatte ausgebildet, welche Erreger- und Sensorspulen umfasst. Ferner ist die Abtasteinheit 23 an einem Gehäuse 22 befestigt, welches wiederum durch Schrauben 27 an einem Flansch 21 fixiert ist. In dem Gehäuse 22 befindet sich neben der Abtasteinheit 23 eine weitere Platine 24, welche ebenfalls als Ring ausgestaltet ist und auf der Bausteine einer Auswerteelektronik 25 montiert sind. Unter anderem ist der Auswerteelektronik 25 ein ASIC-Baustein 25.1 zugeordnet. In diesem ASIC-Baustein 25.1 ist eine Schaltung 25.13 zur Bestimmung der relativen Drehzahl n zwischen der Abtasteinheit 23 der Messteilung 13, sowie eine Reglereinheit 25.12 integriert. Der Reglereinheit 25.12 ist eine Einheit 25.12a zugeordnet, deren Funktion weiter unten im Text beschrieben wird. Weiterhin umfasst der ASIC-Baustein 25.1 unter anderem einen Temperatursensor 25.11. Die Platine 24 weist einen Steckverbinder 26 auf, an den ein Verbindungskabel zu einer Folgeelektronik 2 (Figur 3) anschließbar ist.

Im vorgestellten Ausführungsbeispiel ist das Winkelmessgerät also in einer Hohlwellenbauweise ausgestaltet, so dass die Welle 1 deren Drehwinkel α gemessen werden soll, von der Winkelmesseinrichtung umschließend aufgenommen wird.

Die Messteilung 13 und die Abtasteinheit 23 sind relativ zueinander drehbar angeordnet, wobei die an der Welle 1 befestigte Messteilung 13 im Betrieb der Winkelmesseinrichtung rotiert. Demnach entspricht hier die relative Drehzahl n zwischen der Abtasteinheit 23 und der Messteilung 13 auch der Drehzahl n zwischen der Welle 1 und dem feststehenden Flansch 21, also vereinfacht ausgedrückt der Drehzahl n der Welle 1. Durch die nicht rotierenden Erregerspulen auf der statorseitigen Abtasteinheit 23 wird dann ein homogenes Wechselfeld erzeugt, das durch die Messteilung 13 abhängig von der Winkelstellung, bzw. vom Drehwinkel α der Welle 1 moduliert wird. In den Sensorspulen, die sich ebenfalls auf der Abtasteinheit 23 befinden, werden durch das modulierte elektromagnetische Feld winkelabhängige Ausgangssignale A, B erzeugt. Diese Ausgangssignale A, B werden dann der Auswerteelektronik 25 zugeführt, wo diese weiterverarbeitet werden. In der Reglereinheit 25.12 werden die Ausgangssignale A, B dahingehend geregelt, dass diese stets gleich bleibende Signalamplituden bzw. Pegel aufweisen. Zu diesem Zweck werden zunächst der Einheit 25.12a die Signalamplituden L_{act} der Ausgangssignale A, B als Ist-Werte bestimmt. Danach wird die Abweichung δ zwischen den zuvor bestimmten Signalamplituden L_{act} und einem vorgegebenen Soll-Amplitudenwert Lₛₑₜ bestimmt. Abhängig vom Betrag der Abweichung δ wird eine Stellgröße S ermittelt, mit dem Ziel die Abweichung δ innerhalb vorgegebener Grenzen zu halten. Durch Einwirken auf diese Stellgröße S, welche im vorgestellten Ausführungsbeispiel die Bestromung der Sendespulen ist, werden die Signalamplituden weitgehend konstant groß gehalten.

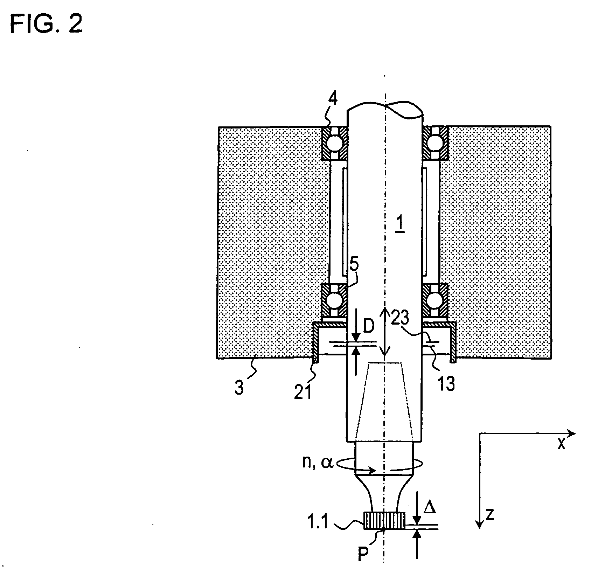

Gemäß der Figur 2 wird im gezeigten Ausführungsbeispiel die Welle 1 als Spindel einer Werkzeugmaschine verwendet. In der Welle 1 ist deshalb eine konische Bohrung vorgesehen, zur Aufnahme eines Werkzeugs 1.1 das hier definitionsgemäß der Welle 1 zugeordnet ist. Die Welle 1 ist durch Wälzlager 4, 5 drehbar gelagert und mit einem Elektromotor 3 antreibbar. In der gezeigten Anordnung befindet sich die Winkelmesseinrichtung entlang der Welle 1 zwischen dem Werkzeug 1.1 und demjenigen Lager 5, welches dem Werkzeug 2 am nächsten liegt. Mit anderen Worten ist die Winkelmesseinrichtung bearbeitungsseitig auf der Welle 1 bzw. Spindel montiert.

Wenn nun eine Anordnung gemäß der Figur 2 über längere Zeit betrieben wird, wird in die Welle 1 Wärme, beispielsweise aus dem Elektromotor 3 und den Lagern 4, 5 eingeleitet. Dies hat eine Längenänderung Δ der Welle 1 zur Folge. Entsprechend ergibt sich eine Verschiebung der Position des Werkzeuges 1.1 in Z-Richtung um die Längenänderung Δ. Zur Steigerung der Präzision der Werkzeugmaschine wird nun der Betrag der Längenänderung A bestimmt, und der numerischen Steuerung der Werkzeugmaschine bzw. der Folgeelektronik 2 zur Positionskorrektur zugeführt, wobei die Längenänderung Δ z. B. in 1 µm bis 10 µm Schritten ausgegeben wird. Mit der erfindungsgemäßen Winkelmesseinrichtung ist hierfür kein separates Positionsmessgerät zur Bestimmung der Längenänderung Δ nötig.

Zunächst wird der tatsächliche Ist-Wert des Abtastabstandes D bestimmt. Zu diesem Zweck werden die Ausgangssignale A, B, hier um 90° phasenversetzte Inkrementalsignale, von der Abtasteinheit 23 der Auswerteelektronik 25 zugeführt. In der Reglereinheit 25.12 wird ein zur Regelung der gleich bleibenden Signalamplituden erforderliche Betrag der Stellgröße S gebildet. Im vorgestellten Ausführungsbeispiel werden in der Einheit 25.12a die Signalamplituden L_{act} bestimmt, indem aus jeweils acht aufeinander folgenden Ausgangssignale A, B ein Amplitudenmittelwert gebildet wird. Danach wird überprüft, in welchem Maße die derart bestimmten Signalamplituden L_{act} von einem vorgegebenen Soll-Amplitudenwert Lₛₑₜ abweichen. Ist der Betrag der Abweichung |δ| (δ = L_{act} - Lₛₑₜ) zu groß, bzw. liegen die Signalamplituden L_{act} außerhalb eines vorbestimmten Regelfensters, so wird der Betrag der Stellgröße S bzw. der Verstärkungsfaktor entsprechend geändert, so dass sich die Pegel bzw. Signalamplituden der Ausgangssignale A, B dem Soll-Amplitudenwert Lₛₑₜ nähern.

Des weiteren wird in der Schaltung 25.13 die Drehzahl n der Welle 1 auf Basis der Ausgangssignale A, B bestimmt.

Darüber hinaus wird auch die Temperatur T in der Winkelmesseinrichtung - hier die Temperatur, welche im Gehäuse 22 der Winkelmesseinrichtung vorherrscht - durch den Temperatursensor 25.11, welcher im ASIC-Baustein 25.1 integriert ist, bestimmt bzw. gemessen.

Grundsätzlich kann festgestellt werden, dass der Betrag der Stellgröße S bzw. der Verstärkungsfaktor für die Bestromung der Sendespulen mit wachsendem tatsächlichem Abtastabstand D steigt. Diese prinzipielle Betrachtung liefert aber den tatsächlichen Abtastabstand D nicht in der Genauigkeit, wie er für die Positionskorrektur der Werkzeugmaschine notwendig wäre. Es wurde herausgefunden, dass die Genauigkeit in ausreichendem Maße verbessert werden kann, wenn die Temperatur T in der Winkelmesseinrichtung mitberücksichtigt wird. Bei steigender Temperatur T steigt auch der erforderliche Betrag der Stellgröße S. Somit basiert die Bestimmung des Abtastabstands D auch auf der erfassten Temperatur T. Zu weiteren Erhöhung der Genauigkeit wird zur Bestimmung des Abtastabstands D zusätzlich die vorliegende erfasste Drehzahl n der Welle 1 korrigierend herangezogen.

Der Abtastabstand D, welcher in Abhängigkeit vom Betrag der Stellgröße S, von der gemessenen Temperatur T und der vorliegenden Drehzahl n bestimmt ist, wird in digitaler Form einer weiteren elektronischen Schaltung, die ebenfalls im ASIC-Baustein 25.1 integriert ist, zugeführt. Falls für die Regelung ein vergleichsweise großes Regelfenster vorgegeben werden kann, wenn also auch bei relativ großen Abweichung |δ|, keine Änderung der Stellgröße S erfolgt, so kann optional die Bestimmung des Abtastabstands D statt auf der der Stellgröße S auf dem Ist-Wert der Signalamplitude L_{act} basieren. Eine derartige Regeleinheit kann dann mit einem unterlagerten Regelkreis, im Sinne einer Kaskadenregelung, ausgestaltet sein. Unabhängig davon, ob die Stellgröße S oder direkt die Signalamplituden L_{act} für die darauf folgenden Verfahrensschritte im Betrieb der Winkelmesseinrichtung herangezogen wird bzw. werden, erfolgt das Bestimmen des Abtastabstands D stets auf Basis der Signalamplituden L_{act}, denn die Stellgröße S basiert schließlich ihrerseits auf den Signalamplituden L_{act}.

Im ASIC-Baustein 25.1 ist ein so genanntes Motormodell hinterlegt, das basierend auf dem Abtastabstand D als Input-Größe die Bestimmung bzw. Berechnung der Längenänderung Δ für einen Punkt P auf der Welle 1 außerhalb der Winkelmesseinrichtung ermöglicht. Dabei ist es vorteilhaft, dass die Hülse 12 und die Welle 1 den gleichen Wärmeausdehnungskoeffizienten aufweisen. Die Verlagerung des Punktes P in Z-Richtung um die Längenänderung Δ kann dann bei der Positionierung des Werkzeugs 2 berücksichtigt werden. In das Motormodell können geometrische Maschinendaten und thermodynamische Größen eingearbeitet werden. Im einfachsten Fall und bei geeigneten geometrischen Verhältnissen, kann aber die Änderung des Abtastabstand D in Bezug auf einen Referenzabstand, z.B. bei Raumtemperatur, direkt zur Positionskorrektur verwendet werden. Das heißt, dass die Änderung des Abtastabstands D unter bestimmten Voraussetzungen der Längenänderung Δ für einen Punkt P außerhalb der Winkelmesseinrichtung gleichgesetzt werden kann.

Je nach den jeweiligen Erfordernissen kann über eine Schnittstelle, die am Winkelmessgerät eingerichtet ist, entweder der Abtastabstand D oder die Längenänderung Δ oder beide Größen z. B. über eine serielle Datenübertragung an die Folgeelektronik 2 übermittelt werden. Ferner werden der Folgeelektronik 2 gemäß der Figur 3 auch der Drehwinkel α, die Drehzahl n der Welle 1 und die Temperatur T in der Winkelmesseinrichtung zur weiteren elektronischen Verarbeitung weitergeleitet.

## Patentansprüche

1. Feldmodulierende Winkelmesseinrichtung, basierend auf einem induktiven oder kapazitiven Messprinzip oder auf einer Kombination der genannten Messprinzipien, umfassend
- eine Abtasteinheit (23),
- eine Messteilung (13),
- eine Auswerteelektronik (25), wobei
die Abtasteinheit (23) und die Messteilung (13) in einem Abtastabstand (D) relativ zueinander drehbar angeordnet sind, und von der Abtasteinheit (23) winkelabhängige Ausgangssignale (A, B) erzeugbar sind, welche in der Auswerteelektronik (25) weiterverarbeitbar sind, sowie - eine Einheit (25.12a) zur Bestimmung der Signalamplituden (L_{act}) der Ausgangssignale (A, B), **dadurch gekennzeichnet, dass**
die Winkelmesseinrichtung einen Temperatursensor (25.11) umfasst, durch welchen eine Temperatur (T) in der Winkelmesseinrichtung bestimmbar ist, und
die Winkelmesseinrichtung in der Weise konfiguriert ist, dass basierend auf der Temperatur (T) und den Signalamplituden (L_{act}) der Abtastabstand (D) bestimmbar ist.

2. Feldmodulierende Winkelmesseinrichtung gemäß dem Anspruch 1, **dadurch gekennzeichnet, dass** die Einheit (25.12a) zur Bestimmung der Signalamplituden (L_{act}) einer Reglereinheit (25.12) zugeordnet ist, und die Reglereinheit (25.12) derart konfiguriert ist, dass die Signalamplituden (L_{act}) der Ausgangssignale (A, B) durch Einwirken auf eine Stellgröße (S) eine vorgegebene Abweichung (δ) von einem Soll-Amplitudenwert (Lₛₑₜ) nicht überschreiten.

3. Feldmodulierende Winkelmesseinrichtung gemäß dem Anspruch 1 oder 2, **dadurch gekennzeichnet, dass** zur Bestimmung des Abtastabstandes (D), die Winkelmesseinrichtung eine Schaltung 25.13 zur Bestimmung der relativen Drehzahl (n) zwischen der Abtasteinheit (23) der Messteilung (13) umfasst.

4. Feldmodulierende Winkelmesseinrichtung gemäß einem der vorhergehenden Ansprüche, **dadurch gekennzeichnet, dass** die Auswerteelektronik (25) so konfiguriert ist, dass durch diese der Abtastabstand (D) bestimmbar ist.

5. Feldmodulierende Winkelmesseinrichtung gemäß dem Anspruch 4, **dadurch gekennzeichnet, dass** die Auswerteelektronik (25) so konfiguriert ist, dass durch diese ein digitaler Wert für den Abtastabstand (D) bestimmbar ist.

6. Feldmodulierende Winkelmesseinrichtung gemäß einem der vorhergehenden Ansprüche, **dadurch gekennzeichnet, dass** die Winkelmesseinrichtung eine Schnittstelle umfasst, über die der Wert für den Abtastabstand (D) an eine Folgelektronik übertragbar ist.

7. Feldmodulierende Winkelmesseinrichtung gemäß einem der vorhergehenden Ansprüche, **dadurch gekennzeichnet, dass** die Auswerteelektronik (25) einen ASIC-Baustein (25.1) umfasst.

8. Feldmodulierende Winkelmesseinrichtung gemäß einem der vorhergehenden Ansprüche, **dadurch gekennzeichnet, dass** der Temperatursensor (25.11) in die Auswerteelektronik (25) integriert ist.

9. Feldmodulierende Winkelmesseinrichtung gemäß dem Anspruch 7 und 8, **dadurch gekennzeichnet, dass** der Temperatursensor (25.11) in den ASIC-Baustein (25.1) integriert ist.

10. Feldmodulierende Winkelmesseinrichtung gemäß einem der vorhergehenden Ansprüche, **dadurch gekennzeichnet, dass** die Winkelmesseinrichtung so konfiguriert ist, dass eine Welle (1) deren Drehwinkel (α) gemessen werden soll, von der Winkelmesseinrichtung umschließend aufgenommen werden kann.

11. Feldmodulierende Winkelmesseinrichtung gemäß einem der vorhergehenden Ansprüche, **dadurch gekennzeichnet, dass** die Winkelmesseinrichtung als eine induktive Winkelmesseinrichtung ausgebildet ist.

12. Verfahren zum Betrieb einer feldmodulierenden Winkelmesseinrichtung, deren Messprinzip auf einem induktiven oder kapazitiven Prinzip basiert oder auf einer Kombination der genannten Messprinzipien, und die eine Abtasteinheit (23) und eine Messteilung (13) umfasst, die relativ zueinander drehbar sind, wobei bei der Abtastung winkelabhängige Ausgangssignale (A, B) erzeugt werden, wobei das Verfahren folgende Schritte umfasst:
a) Bestimmen der Signalamplituden (L_{act}) der Ausgangssignale (A, B),
b) Erfassen der Temperatur (T) in der Winkelmesseinrichtung,
c) Bestimmen des Abtastabstands (D) auf Basis der Signalamplituden (L_{act}) und der erfassten Temperatur (T).

13. Verfahren zum Betrieb einer feldmodulierenden Winkelmesseinrichtung gemäß dem Anspruch 12, wobei die Abweichung (δ) zwischen den zuvor bestimmten Signalamplituden (L_{act}) der Ausgangssignale (A, B) und einem Soll-Amplitudenwert (Lₛₑₜ) bestimmt wird, und abhängig vom Betrag der Abweichung (δ) eine Stellgröße (S) ermittelt wird, mit dem Ziel die Abweichung (δ) innerhalb vorgegebener Grenzen zu halten, wobei basierend auf der Stellgröße (S) der Abtastabstand (D) bestimmt wird.

14. Verfahren gemäß dem Anspruch 12 oder 13, wobei die feldmodulierende Winkelmesseinrichtung an einer Welle (1) festgelegt ist, wobei weiterhin eine Längenänderung (Δ) der Welle (1) für einen Punkt auf der Welle (1) außerhalb der Winkelmesseinrichtung auf Basis des Abtastabstands (D) bestimmt wird.

15. Verfahren gemäß dem Anspruch 12, 13 oder 14, wobei die relative Drehzahl (n) zwischen der Abtasteinheit (23) und der Messteilung (13) erfasst wird, und die Bestimmung des Abtastabstands (D) auch auf dieser Drehzahl (n) basiert.

16. Verfahren gemäß einem der Ansprüche 12 bis 15, wobei in einer Auswertelektronik (25) gleichzeitig die winkelabhängigen Ausgangssignale (A, B) verarbeitet werden und die Temperatur (T) erfasst wird.

17. Verfahren gemäß einem der Ansprüche 12 bis 16, wobei die Winkelmesseinrichtung als eine induktive Winkelmesseinrichtung ausgebildet ist.

## Claims

1. A field-modulating angle measuring device based on an inductive or capacitive measuring principle or on a combination of the mentioned measuring principles, comprising
- a scanning unit (23),
- a measuring graduation (13),
- an evaluation electronics (25), wherein
the scanning unit (23) and the measuring graduation (13) are arranged at a scanning distance (D) relative to one another so as to be capable of being rotated, and the scanning unit (23) can generate output signals (A, B), which are angle-dependent and which can be further processed in the evaluation electronics (25), as well as
- a unit (25, 12a) for determining the signal amplitudes (L_{act}) of the output signals (A, B), **characterized in that**
the angle measuring device comprises a temperature sensor (25.11), by means of which a temperature (T) can be determined in the angle measuring device, and
the angle measuring device is configured such that the scanning distance (D) can be determined based on the temperature (T) and on the signal amplitudes (L_{act}).

2. The field-modulating angle measuring device according to claim 1, **characterized in that** the unit (25.12a) for determining the signal amplitudes (L_{act}) is assigned to a control unit (25.12) and **in that** the control unit (25.12) is configured such that the signal amplitudes (L_{act}) of the output signals (A, B) do not exceed a predetermined deviation (δ) from a setpoint amplitude value (Lₛₑₜ) by acting on an actuating variable (S).

3. The field-modulating angle measuring device according to claim 1 or 2, **characterized in that**, for determining the scanning distance (D), the angle measuring device comprises a circuit (25.13) for determining the relative speed (n) between the scanning unit (23) and the measuring graduation (13).

4. The field-modulating angle measuring device according to one of the preceding claims, **characterized in that** the evaluation electronics (25) is configured such that the scanning distance (D) can be determined by means of it.

5. The field-modulating angle measuring device according to claim 4, **characterized in that** the evaluation electronics (25) is configured such that a digital value for the scanning distance (D) can be determined by means of it.

6. The field-modulating angle measuring device according to one of the preceding claims, **characterized in that** the angle measuring device comprises and interface, via which the value for the scanning distance (D) can be transferred to a downstream electronics.

7. The field-modulating angle measuring device according to one of the preceding claims, **characterized in that** the evaluation electronics (25) comprises an ASIC module (25.1).

8. The field-modulating angle measuring device according to one of the preceding claims, **characterized in that** the temperature sensor (25.11) is integrated into the evaluation electronics (25).

9. The field-modulating angle measuring device according to claim 7 and 8, **characterized in that** the temperature sensor (25.11) is integrated into the ASIC module (25.1).

10. The field-modulating angle measuring device according to one of the preceding claims, **characterized in that** the angle measuring device is configured such that a shaft (1), the angle of rotation (α) of which is to be measured, can be accommodated so as to be enclosed by the angle measuring device.

11. The field-modulating angle measuring device according to one of the preceding claims, **characterized in that** the angle measuring device is embodied as an inductive angle measuring device.

12. A method for operating a field-modulating angle measuring device, the measuring principle of which is based on an inductive or capacitive principle or on a combination of the mentioned measuring principles, and which comprises a scanning unit (23) and a measuring graduation (13), which can be rotated relative to one another, wherein angle-dependent output signals (A, B) are generated in response to the scanning, wherein the method comprises the following steps:
a) determining the signal amplitudes (L_{act}) of the output signals (A, B),
b) capturing the temperature (T) in the angle measuring device,
c) determining the scanning distance (D) on the basis of the signal amplitudes (L_{act}) and of the captured temperature (T).

13. The method for operating a field-modulating angle measuring device according to claim 12, wherein the deviation (δ) between the previously determined signal amplitudes (L_{act}) of the output signals (A, B) and a setpoint amplitude value (Lₛₑₜ) is determined and an actuating variable (S) is determined as a function of the amount of the deviation (δ), with the goal of holding the deviation (δ) within predetermined limits, wherein the scanning distance (D) is determined based on the actuating variable (S).

14. The method according to claim 12 or 13, wherein the field-modulating angle measuring device is fixed to a shaft (1), wherein a change in length (Δ) of the shaft (1) for a point on the shaft (1) outside of the angle measuring device is furthermore determined on the basis of the scanning distance (D).

15. The method according to claim 12, 13 or 14, wherein the relative speed (n) is captured between the scanning unit (23) and the measuring graduation (13), and the determination of the scanning distance (D) is also based on this speed (n).

16. The method according to one of claims 12 to 15, wherein the angle-dependent output signals (A, B) are processed and the temperature (T) is captured at the same time in an evaluation electronics (25).

17. The method according to one of claims 12 to 16, wherein the angle measuring device is embodied as an inductive angle measuring device.

## Revendications

1. Dispositif de mesure d'angle à modulation de champ, basé sur un principe de mesure inductif ou capacitif ou sur une combinaison des principes de mesure cités, comprenant :
- une unité de balayage (23),
- une graduation (13),
- une électronique d'évaluation (25), où
l'unité de balayage (23) et la graduation (13) sont disposées de façon rotative à une distance de balayage (D) l'une par rapport à l'autre, et des signaux de sortie (A, B) dépendant de l'angle peuvent être produits par l'unité de balayage (23) et traités ensuite par l'électronique d'évaluation (25), et
- une unité (25.12a) pour la détermination des amplitudes de signaux (L_{act}) des signaux de sortie (A, B), **caractérisé en ce que**
le dispositif de mesure d'angle comprend un capteur de température (25.11), par lequel une température (T) dans le dispositif de mesure d'angle peut être déterminée, et
le dispositif de mesure d'angle est configuré de telle manière, que la distance de balayage (D) peut être déterminée sur la base de la température (T) et des amplitudes de signaux (L_{act}).

2. Dispositif de mesure d'angle à modulation de champ selon la revendication 1, **caractérisé en ce que** l'unité (25.12a) pour la détermination des amplitudes de signaux (L_{act}) est attribuée à une unité de régulation (25.12), et l'unité de régulation (25.12) est configurée de telle manière, que les amplitudes de signaux (L_{act}) des signaux de sortie ne dépassent pas un écart prédéfini (δ) par rapport à une valeur d'amplitude théorique (Lₛₑₜ).

3. Dispositif de mesure d'angle à modulation de champ selon la revendication 1 ou 2, **caractérisé en ce que** pour la détermination de la distance de balayage (D), le dispositif de mesure d'angle comprend un circuit (25.13) pour la détermination de la vitesse de rotation (n) entre l'unité de balayage (23) et la graduation (13).

4. Dispositif de mesure d'angle à modulation de champ selon l'une des revendications précédentes, **caractérisé en ce que** l'électronique d'évaluation (25) est configurée de telle manière, que celle-ci permet de déterminer la distance de balayage (D).

5. Dispositif de mesure d'angle à modulation de champ selon la revendication 4, **caractérisé en ce que** l'électronique d'évaluation (25) est configurée de telle manière, que celle-ci permet de déterminer une valeur digitale pour la distance de balayage (D).

6. Dispositif de mesure d'angle à modulation de champ selon l'une des revendications précédentes, **caractérisé en ce que** le dispositif de mesure d'angle comprend une interface, par laquelle la valeur pour la distance de balayage (D) peut être transmise à une électronique en aval.

7. Dispositif de mesure d'angle à modulation de champ selon l'une des revendications précédentes, **caractérisé en ce que** l'électronique d'évaluation (25) comprend un élément ASIC (25.1).

8. Dispositif de mesure d'angle à modulation de champ selon l'une des revendications précédentes, **caractérisé en ce que** le capteur de température (25.11) est intégré dans l'électronique d'évaluation (25).

9. Dispositif de mesure d'angle à modulation de champ selon les revendications 7 et 8, **caractérisé en ce que** le capteur de température (25.11) est intégré dans l'élément ASIC (25.1).

10. Dispositif de mesure d'angle à modulation de champ selon l'une des revendications précédentes, **caractérisé en ce que** le dispositif de mesure d'angle est configuré de telle manière, qu'une onde (1) dont l'angle de rotation (α) doit être mesuré peut être admise par le dispositif de mesure d'angle.

11. Dispositif de mesure d'angle à modulation de champ selon l'une des revendications précédentes, **caractérisé en ce que** le dispositif de mesure d'angle est conçu comme un dispositif de mesure d'angle inductif.

12. Procédé pour le fonctionnement d'un dispositif de mesure d'angle à modulation de champ, dont le principe de mesure est basé sur un principe inductif ou capacitif ou sur une combinaison des principes de mesure cités, et qui comprend une unité de balayage (23) et une graduation (13), rotatives l'une par rapport à l'autre, dans lequel des signaux de sortie (A, B) dépendant de l'angle sont produits lors du balayage, le procédé comprenant les étapes suivantes :
a) Détermination des amplitudes de signaux (L_{act}) des signaux de sortie (A, B),
b) Détection de la température (T) dans le dispositif de mesure d'angle,
c) Détermination de la distance de balayage (D) sur la base des amplitudes de signaux (L_{act}) et de la température détectée (T).

13. Procédé pour le fonctionnement d'un dispositif de mesure d'angle à modulation de champ selon la revendication 12, dans lequel l'écart (δ) entre les amplitudes de signaux (L_{act}) déterminées antérieurement pour les signaux de sortie et une valeur d'amplitude théorique (Lₛₑₜ) est déterminé, et une grandeur de réglage (S) est déterminée en fonction du montant de l'écart (δ), avec comme but de maintenir l'écart (δ) dans des limites prédéfinies, la distance de balayage (D) étant déterminée sur la base de la grandeur de réglage (S).

14. Procédé selon la revendication 12 ou 13, dans lequel le dispositif de mesure d'angle à modulation de champ est défini sur une onde (1), et dans lequel un changement de longueur (Δ) de l'onde (1) est déterminé pour un point sur l'onde (1) à l'extérieur du dispositif de mesure d'angle, sur la base de la distance de balayage (D).

15. Procédé selon la revendication 12, 13 ou 14, dans lequel la vitesse de rotation (n) relative entre l'unité de balayage (23) et la graduation (13) est détectée, et la détermination de la distance de balayage (D) est également basée sur la vitesse de rotation (n).

16. Procédé selon l'une des revendications 12 à 15, dans lequel, dans l'électronique d'évaluation (25), les signaux de sortie (A, B) dépendants de l'angle sont traités et la température (T) est détectée simultanément.

17. Procédé selon l'une des revendications 12 à 16, dans lequel le dispositif de mesure d'angle est conçu comme un dispositif de mesure d'angle inductif.
